# EUROPEAN PATENT APPLICATION

(11) **EP 4 180 209 A1**
(43) Date of publication of application: **17.05.2023**
(21) Application number: 20949802.1
(22) Date of filing: 19.08.2020
(51) Int. Cl.: B29C 64/153, B22F 3/105, B22F 7/08, B33Y 30/00

(54) **METHOD AND DEVICE FOR FORMULATING PRINTING PROCESS IN ADDITIVE MANUFACTURING**

(71) Applicant: Siemens Aktiengesellschaft, 80333 München (DE)
(72) Inventor: WU, Qi, Shanghai 201315 (CN); QI, Xinbo, Beijing, 100102 (CN); LI, Changpeng, Beijing 100102 (CN); CHEN, Guofeng, Beijing 100135 (CN)
(74) Representative: Isarpatent
(86) International application number: PCT/CN2020/110022
(87) International publication number: WO 2022/036591

(57) **Abstract**

A method and device for formulating a printing process in additive manufacturing (AM). The method comprises: acquiring the structure and size of a single repeating unit in the structure of a printout in AM; layering the single repeating unit according to a set layering thickness of the repeating unit; for each layer in the single repeating unit, searching for a material-filled area in the layer, and formulating a printing process for the layer according to all of the material-filled areas contained in the layer; layering the entire printout according to a pre-defined printout layer thickness; and determining a layer of various repeating units through which the layer of the printout passes, and mapping, according to the printing process of the layer of various repeating units through which the layer of the printout passes, to obtain a printing process of the layer of the printout. The present method may achieve the formulation of a printing process for a printout of any structure, and thus reduces the calculation resources that are consumed by the printing process for formulating a printout.

## Description

### Technical Field

The present invention relates to the technical field of additive manufacturing (AM), and in particular to a method and a device for formulating a printing process in additive manufacturing.

### Background Art

Lattice structure is a bionic structure based on repeating unit cells, and as a truss composed of rhombuses, honeycombs, or random patterns, it is applicable to situations requiring high strength and low quality. The introduction of lattice structure enables designers to explore the potential for greater design space by reconsidering the functions and performance (such as thermal insulation performance and dampening of vibrations) of parts.

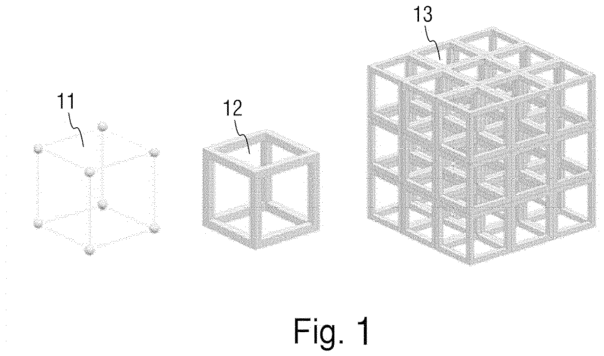

A lattice structure having a simple unit cell structure can quickly adapt to a computer-aided design (CAD) model, but a unit cell with a complex surface or structure cannot be created by a general program provided by CAD software, so, in professional software, sometimes a unit cell is designed by defining implicit surfaces with functions. In a lattice structure, the unit cell is the smallest repeating unit, which is defined by vertices, and Fig. 1 is a schematic diagram of a cubic unit cell, wherein, as shown in Fig. 1, 11 is a schematic diagram of the structural definition of a cubic unit cell, from which it is clear that the cubic unit cell is defined by 8 vertices, 12 is a cubic unit cell, and 13 is a lattice structure composed of an arrangement of the cubic unit cells.

Additive manufacturing, commonly known as 3D printing, is a manufacturing technology that integrates computer-aided design, material processing and molding technology, and is used to, based on a digital model file, manufacture a physical object by stacking special metal materials, non-metallic materials and medical biological materials layer by layer by means of extruding, sintering, melting, light curing, spraying, etc., with software and a numerical control system. Additive manufacturing technology is a scientific and technological system in which, on the basis of the stacking-forming principle, a printout is directly manufactured as driven by three-dimensional data on the printout.

Although a lattice structure has a number of advantages, the complexity of its geometric structure makes it difficult to manufacture a lattice structure by using a traditional manufacturing method. Laser-based additive manufacturing is a new technology that enables manufacture of fine features, wherein a focused high-power laser beam is used to repeatedly scan geometrical patterns on a thin layer of metal powder to form a final solid three-dimensional printout. The emergence of additive manufacturing or AM makes it relatively easy to manufacture lattices in a relatively short time. Also, the freedom of design provided by AM allows the creation of complex lattices to improve printout performance.

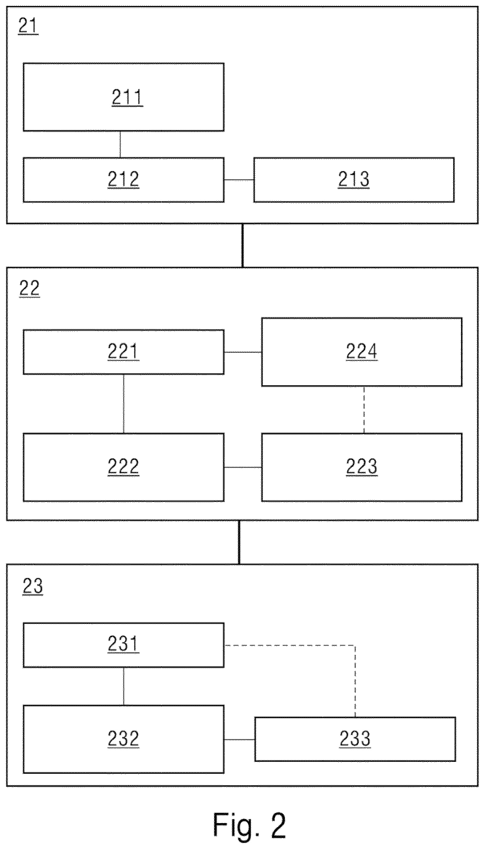

Fig. 2 is a schematic diagram of an existing process in additive manufacturing, and, as shown in Fig. 2, an existing process in additive manufacturing comprises three stages: a design stage 21, a planning stage 22, and a manufacturing stage 23.
1. The design stage 21 comprises the following procedure:
   step 211: determining the shape and size of the printout to be printed, and designing, with a CAD tool, a structure 212 of a lattice inside the printout according to the shape and size of the printout; or, acquiring a structure 212 of a lattice inside the printout by reverse engineering, specifically, if a lattice already exists that meets the requirements for the printout, scanning the lattice to acquire a structure 212 of the lattice;
   step 213: writing the lattice structure into a data file;
2. The planning stage 22 comprises the following steps:
   step 221: determining the direction of placement of the printout;
   step 222: determining a support structure of the printout, which comprises a support structure for preventing thermal deformation and a support structure between the printout and the substrate;
   step 223: layering the lattice structure of the printout and formulating a printing process for each layer, the printing process comprising: a laser power, scanning speed, layer thickness, and scanning strategy, the scanning strategy comprising: material filling mode, overlapping area between adjacent scans, and definitions of specific parameters, such as contour and angle between current layer and print horizontal axis, etc.;
   after a printing process is formulated, it is possible to further perform step 224: simulating the printing process, optimizing the direction of placement of the printout according to a simulation result, returning the optimized direction of placement of the printout to step 221, and then repeating the above steps.
3. The manufacturing stage 23 comprises the following steps:
   step 231: printing according to the printing process of the layer to acquire the printout;
   during the printing process, step 232 and step 233 are performed to monitor and control the process.

However, obstacles are encountered in the processing of a lattice structure by AM. Existing CAD software can easily process small lattices with only hundreds of rods. However, in some industrial fields, such as aerospace industry, larger lattice structures need to be manufactured. As lattices become increasingly larger, when a CAD model and a digital model file are generated in the design stage, the computational complexities created by hundreds of thousands of lattice elements (such as unit cells) are much greater than usual, so it is necessary to increase the processing capacity of layering tools to meet the needs, while allowing designers to perform operations without limitations on design complexity.

A greater challenge is posed by the need to calculate a printing process and apply process parameters, such as filling mode and contour, in the planning stage. With the increase of the number of unit cells, each layer may be complex, for which it is necessary to scan thousands of isolated areas and calculate specific laser paths. As lattices become increasingly larger, each layer becomes more and more complex, which requires computers to have increasingly larger memories and higher computing power. In order to overcome limitations in terms of software and computation, lattices are sometimes printed out by file segmentation, which, however, consumes much time and energy.

### Summary of the Invention

In view of the above-described problems, embodiments of the present invention propose a method and a device for formulating a printing process in additive manufacturing to allow the formulation of a printing process for a printout of any structure and save the calculation resources consumed by the printing process for formulating a printout.

A technical solution provided by an embodiment of the present invention is realized as follows:
a method for formulating a printing process in additive manufacturing, comprising:
acquiring the structure and size of a single repeating unit in the structure of a printout in additive manufacturing;
layering the single repeating unit according to a set layering thickness of the repeating unit;
for each layer in a single repeating unit, searching for a material-filled area in the layer, and formulating a printing process for the layer according to all of the material-filled areas contained in the layer;
layering the entire printout according to a predefined printout layer thickness;
determining a layer of various repeating units through which the layer of the printout passes, and mapping, according to the printing process of the layer of various repeating units through which the layer of the printout passes, to obtain a printing process of the layer of the printout.

For each layer in a single repeating unit, searching for a material-filled area in the layer comprises:
for each layer in a single repeating unit, searching for a closed solid area in the layer, and determining each closed solid area as a material-filled area.

Formulating a printing process for the layer according to all of the material-filled areas contained in the layer comprises:
the contents of the printing process, which comprise: a laser power, scanning speed, repeating unit layer thickness, and scanning strategy, the scanning strategy comprising: a filling mode and location information of each material-filled area.

The filling mode comprises: scan area features and scan vector information, wherein the scan area features include: a shape and size of a scan area, and the scan vector information includes: a scan vector direction, translation size or offset direction between adjacent scan vectors.

Mapping, according to the printing process of the layer of various repeating units through which the layer of the printout passes, to obtain a printing process of the layer of the printout comprises:
for the printing process of the layer of various repeating units through which the layer of the printout passes, converting position information of various material-filled areas in each printing process from the coordinate system of the repeating unit to the coordinate system of the printout, and then adding the printing process subjected to the coordinate conversion to the printing process of the layer of the printout.

Acquiring the structure and size of a single repeating unit in the structure of a printout in additive manufacturing comprises:
according to the shape and size of the printout and a predefined arrangement of the repeating units inside the printout, designing the structure and size of a single repeating unit by using a computer-aided design tool; or
acquiring the structure and size of a single repeating unit in the structure of the printout, and defining the structure and size of a single repeating unit by using implicit functions.

After mapping, according to the printing process of the layer of various repeating units through which the layer of the printout passes, to obtain a printing process of the layer of the printout, the method further comprises:
performing printing tasks according to the printing processes of various layers of the printout to acquire the printout.

A device for formulating a printing process in additive manufacturing, comprising:
a repeating unit printing process determining module, configured to acquire the structure and size of a single repeating unit in the structure of a printout in additive manufacturing; layer the single repeating unit according to a set layering thickness of the repeating unit; for each layer in a single repeating unit, search for a material-filled area in the layer, and formulate a printing process for the layer according to all of the material-filled areas contained in the layer;
a printout printing process determining module, configured to layer the entire printout according to a predefined printout layer thickness; determine a layer of various repeating units through which the layer of the printout passes, and map, according to the printing process of the layer of various repeating units through which the layer of the printout passes, to obtain a printing process of the layer of the printout.

Mapping, with the printout printing process determining module, according to the printing process of the layer of various repeating units, through which the layer of the printout passes, to obtain a printing process of the layer of the printout comprises:
for the printing process of the layer of various repeating units through which the layer of the printout passes, converting position information of various material-filled areas in each printing process from the coordinate system of the repeating unit to the coordinate system of the printout, and then adding the printing process subjected to the coordinate conversion to the printing process of the layer of the printout.

A device for formulating a printing process in additive manufacturing, comprising: a memory and a processor capable of accessing the memory, the memory storing an instruction that, when executed by the processor, causes the processor to perform the steps of a method as described above.

In embodiments of the present invention, without the need to design a printing process of a repeating unit and a printing process of the entire printout by using a computer-aided design tool, a printing process is generated for each layer of the repeating unit by an analog printing method, and then, by an analog printing method, according to the printing process of the layer of various repeating units, through which the layer of the printout passes, the printing process of the layer of various repeating units is mapped to obtain a printing process of the layer of the printout, so that it may be used to manufacture a printout of any structure, which means that no matter how complex the structure of a printout is, by using embodiments of the present invention, a printing process may be formulated for the printout and used for production and manufacturing, and since an analog printing method is adopted, without the need to calculate a three-dimensional data model for a printout composed of repeating units, computing resources are greatly saved and efficiency is improved.

### Brief Description of the Drawings

Preferred embodiments of the present invention will be described in detail below with reference to the drawings, allowing those of ordinary skill in the art to have a clearer understanding of the above-described and other features and advantages of the present invention, and among the drawings:
Fig. 1 is a schematic diagram of a cubic unit cell;
Fig. 2 is a schematic diagram of an existing process in additive manufacturing;
Fig. 3 is a flow chart of a method for formulating a printing process in additive manufacturing provided by an embodiment of the present invention;
Fig. 4 is a flow chart of a method for formulating a printing process of a lattice structure provided by another embodiment of the present invention;
Fig. 5 is a schematic diagram of the layering of a unit cell according to an embodiment of the present invention;
Fig. 6 is a schematic diagram of a strip filling mode;
Fig. 7 is a structural diagram of a device for formulating a printing process in additive manufacturing provided by an embodiment of the present invention;
Fig. 8 is a structural diagram of a device for formulating a printing process in additive manufacturing provided by another embodiment of the present invention.

Meanings of the reference signs are listed in the following table:

| Reference sign | Meaning |
|---|---|
| 11 | Diagram of structural definition of cubic unit cell |
| 12 | Cubic unit cell |
| 13 | Lattice structure composed of an arrangement of cubic unit cells |
| 21 | Design stage |
| 22 | Planning stage |
| 23 | Manufacturing stage |
| 211, 213, 221 - 224, 231 - 233 | Step |
| 212 | Lattice structure |
| 301 - 305, 401 - 409 | Step |
| s1 - s4, r1 - r4 | Material-filled area |
| 61 | Scan strip 1 |
| 62 | Scan strip 2 |
| 70 | Device 1 for formulating a printing process in additive manufacturing |
| 71 | Repeating unit printing process determining module |
| 72 | Printout printing process determining module |
| 80 | Device 2 for formulating a printing process in additive manufacturing |
| 81 | Memory |
| 82 | Processor |

### Specific Embodiments

To make the objectives, technical solutions, and benefits of the present invention clearer, the present invention will be described in greater detail below by referring to embodiments.

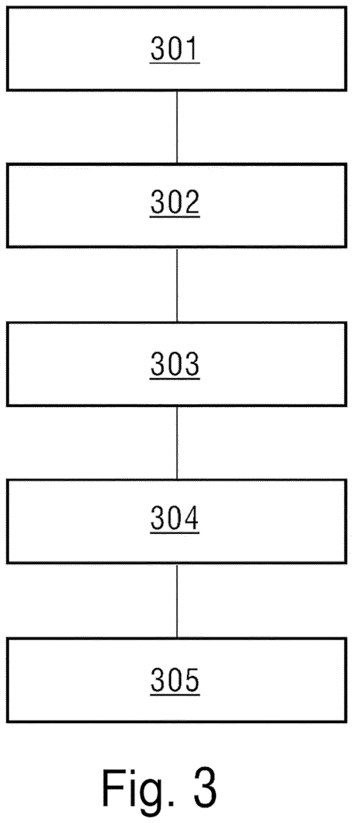

Fig. 3 is a flow chart of a method for formulating a printing process in additive manufacturing provided by an embodiment of the present invention, the steps being specifically as follows:
Step 301: Acquire the structure and size of a single repeating unit in the structure of a printout in additive manufacturing.

In an optional embodiment, acquiring the structure and size of a single repeating unit in the structure of a printout in additive manufacturing comprises: according to the shape and size of the printout and a predefined arrangement of the repeating units inside the printout, designing the structure and size of a single repeating unit by using a CAD tool; or, acquiring the structure and size of a single repeating unit in the structure of the printout, and defining the structure and size of a single repeating unit by using implicit functions.

Step 302: Layer the single repeating unit according to a set layering thickness of the repeating unit.

Step 303: For each layer in a single repeating unit, search for a material-filled area in the layer and formulate a printing process for the layer according to all of the material-filled areas contained in the layer.

In an optional embodiment, for each layer in a single repeating unit, searching for a material-filled area in the layer comprises: for each layer in a single repeating unit, searching for a closed solid area in the layer, and determining each closed solid area as a material-filled area.

In an optional embodiment, the printing process comprises: a laser power, scanning speed, repeating unit layer thickness, and scanning strategy, the scanning strategy comprising: a filling mode and location information of each material-filled area.

In an optional embodiment, the filling mode comprises: scan area features and scan vector information, wherein the scan area features includes: a shape and size of the scan area, and the scan vector information includes: a scan vector direction, translation size or offset direction between adjacent scan vectors.

Step 304: Layer the entire printout according to a predefined printout layer thickness.

Step 305: Determine a layer of various repeating units through which the layer of the printout passes, and map, according to the printing process of the layer of various repeating units, through which the layer of the printout passes, to obtain a printing process of the layer of the printout.

In an optional embodiment, mapping, according to the printing process of the layer of various repeating units, through which the layer of the printout passes, to obtain a printing process of the layer of the printout comprises: for the printing process of the layer of various repeating units through which the layer of the printout passes, converting position information of various material-filled areas in each printing process from the coordinate system of the repeating unit to the coordinate system of the printout, and then adding the printing process subjected to the coordinate conversion to the printing process of the layer of the printout.

After the printing processes of each layer of the printout are acquired, printing tasks may be performed according to the printing processes of each layer of the printout to acquire the printout.

In the above-described embodiments, without the need to design a printing process of a repeating unit and a printing process of the entire printout by using a computer-aided design tool, a printing process is generated for each layer of the repeating unit by an analog printing method, and then, by an analog printing method, according to the printing process of the layer of various repeating units through which the layer of the printout passes, the printing process of the layer of various repeating units is mapped to obtain a printing process of the layer of the printout, so that it may be used to manufacture a printout of any structure, which means that no matter how complex the structure of a printout is, by using embodiments of the present invention, a printing process may be formulated for the printout and used for production and manufacturing, and since an analog printing method is adopted, without the need to calculate a three-dimensional data model for a printout composed of repeating units, computing resources are greatly saved and efficiency is improved.

A common repeating unit is a unit cell, and a plurality of unit cells are arranged to form a lattice, so the present invention will be described in detail below by taking, for example, a case where a repeating unit is a unit cell:

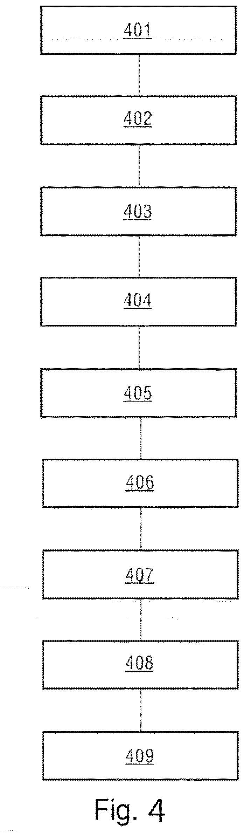

Fig. 4 is a flow chart of a method for formulating a printing process of a lattice structure provided by another embodiment of the present invention, the steps being specifically as follows:
Step 401: According to the shape and size of the printout and a predefined arrangement of the unit cells inside the printout, design the structure and size of a single unit cell by using a CAD tool.

In practical applications, the structure of a single unit cell may also be defined by directly using functions according to the shape and size of the printout and a predefined arrangement of the unit cells inside the printout.

Step 402: Layer a single unit cell according to a predefined unit cell layer thickness.

For example, if the predefined cell layer thickness is t_{c}, then the total number of layers of a single unit cell N_{c} = Z_{c}/t_{c}, wherein Z_{c} is the total thickness (or total height) of a single unit cell.

Step 403: For each layer n (1 ≤ n ≤ N_{c}) of a unit cell, perform the following step 404 respectively:
Step 404: Search for closed solid areas in the layer n, determine each closed solid area of the layer n as a material-filled area, determine the location of each material-filled area, and, according to all of the material-filled areas of the layer n and a predefined filling material, formulate a printing process of the unit cell layer for the layer n, wherein the printing process of the unit cell layer comprises: a laser power, scanning speed, unit cell layer thickness and scanning strategy, the scanning strategy comprising: a filling mode and position information of each material-filled area, and angle between the layer n and the printing horizontal axis.

Each layer of the unit cell corresponds to one printing process of the unit cell layer.

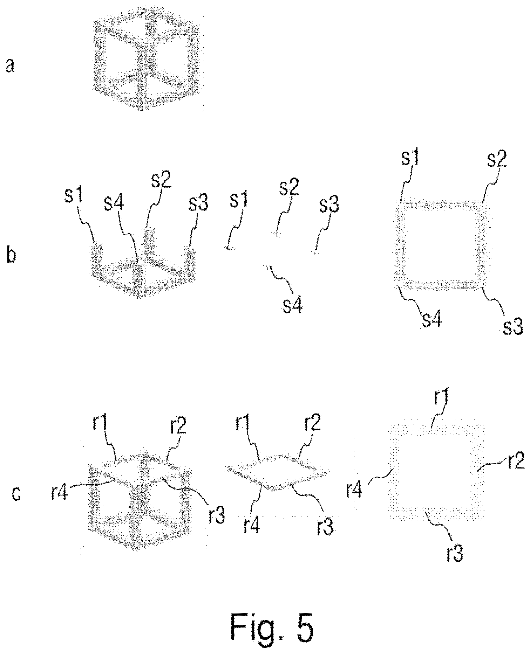

Fig. 5 is a schematic diagram of the layering of a unit cell according to an embodiment of the present invention. In the figure, diagram a is a schematic diagram of a cubic unit cell, wherein, as shown in diagram a, all the 12 edges of the cubic unit cell belong to closed solid areas, and each closed solid area needs to be filled with a material. Diagram b is a schematic diagram of a layer of the unit cell shown in diagram a, wherein, from the left-hand drawing of diagram b, it is clear that areas s1, s2, s3 and s4 each having four edges, through which the layer passes, are all closed solid areas, the middle drawing of diagram b is a section of the four closed solid areas s1, s2, s3 and s4, and the right-hand drawing of diagram b is a top view of the layer, so it is clear that areas s1, s2, s3 and s4 on the layer are material-filled areas, which means that there are 4 material-filled areas on the layer. Diagram c is a schematic diagram of another layer of the unit cell shown in diagram a, wherein it is clear that areas r1, r2, r3 and r4 each having four edges, through which the layer passes, are all closed solid areas, while the middle of diagram c is a section of the closed solid area and the right side of diagram c is a top view of the layer, wherein it is clear that there is only one material-filled area on this layer.

A filling mode comprises: scan area (namely material-filled area) features and scan vector information. The scan area features include: a shape and size of a scan area, and the scan vector information includes: a scan vector direction, translation size or offset direction between adjacent scan vectors.

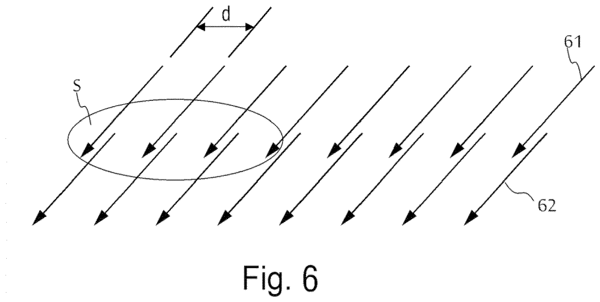

Fig. 6 is a schematic diagram of the strip filling mode, wherein the first row of tilt arrows 61 is scan strip 1, the second row of tilt arrows 62 is scan strip 2, d indicates the translation between two adjacent scans in strip 1, and the circular area S indicates an area in which the scan strip 1 and the scan strip 2 overlap.

Manufacturing time or/and manufactured part performance may vary depending on the filling mode.

A filling mode may be predefined by experiments or simulated and optimized by using process simulation tools of additive manufacturing.

Step 405: Layer the lattice structure inside the printout according to a predefined layer thickness of the lattice structure.

According to a predefined arrangement of unit cells, the lattice structure inside the printout may be acquired.

For example, if the predefined layer thickness of the lattice structure is tₚ, then the total number of layers of the lattice structure inside the printout Nₚ = Zₚ/tₚ, wherein Zₚ is the total thickness (or total height) of the printout.

Step 406: For each layer m (1 ≤ m ≤ Nₚ) of the lattice structure inside the printout, perform the following step 407 respectively:
Step 407: Determine each unit cell and layers of each unit cell through which the current layer m passes, and for the layer l_{d} of each unit cell passed through, perform the following step 408 respectively:
l_{d} is the unit cell layer sequence number of the layer of the dth unit cell through which the current layer m of the lattice structure passes, and the unit cell layer sequence number is the sequence number of a layer in the unit cell where the layer is located, wherein, if a unit cell has N_{c} layers, then the unit cell layer sequence numbers of the layers are 1, 2, 3, ..., N_{c}.

1 ≤ d ≤ D, where D is the total number of unit cells passed through by the current layer m of the lattice structure. In other words, if the current layer m of the lattice structure passes through a total of D unit cells, then the layers of a total of D unit cells are passed through.

Step 408: Among all the printing processes of the unit cell layer formulated in step 404, search for the printing process of the unit cell layer corresponding to the layer l_{d}, convert the position information of each material-filled area in the printing process of the unit cell layer corresponding to the layer l_{d} into the position information under the coordinate system of the lattice structure, and then add the printing process of the unit cell layer subjected to the position information conversion to the printing process of the lattice structure layer of layer m.

Since the position information of each material-filled area in a printing process of the unit cell layer is the position coordinate in the coordinate system of the unit cell, it is necessary to first convert it to a position coordinate in the coordinate system of the lattice structure, and then add the printing process of the unit cell layer to the printing process of the lattice structure layer of the layer m.

Step 409: After step 408 is performed for all layers of all the unit cells through which the layer m passes, the complete printing process of the lattice structure layer for the layer m is acquired, and after steps 407-408 are performed for all the layers of the lattice structure, the printing processes of the lattice structure layer are acquired for all the layers of the lattice structure.

It is thus clear that a printing process of the lattice structure layer for the layer m is composed of the printing processes of the unit cell layer of the layers of all the unit cells through which the layer m passes.

After printing processes of the lattice structure layer of all the layers of the lattice structure are acquired, in the manufacturing stage, laser control parameters, scan control parameters, and printing system control parameters may be generated according to the lattice structure layer printing processes of all the layers of the lattice structure. Among them:
laser control parameters include a laser power and laser on/off control parameters (such as on/off time);
scan control parameters include: scanning speed and filling mode;
printing system control parameters include: laser focusing parameters and lattice structure layer thickness. Oxygen content parameters determined according to the printing environment, process monitoring parameters, etc., may be further included.

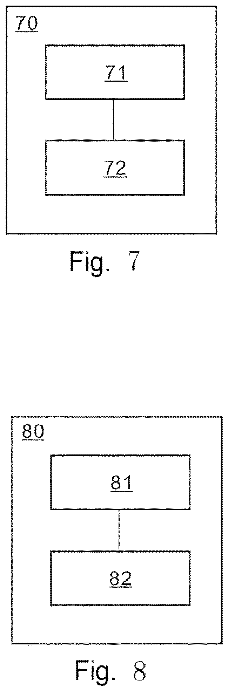

Fig. 7 is a structural diagram of a device for formulating a printing process in additive manufacturing provided by an embodiment of the present invention, the device comprising: a repeating unit printing process determining module 71 and a printout printing process determining module 72, wherein:
The repeating unit printing process determining module 71 is configured to acquire the structure and size of a single repeating unit in the structure of a printout in additive manufacturing; layer the single repeating unit according to a set layering thickness of the repeating unit; for each layer in a single repeating unit, search for a material-filled area in the layer, and formulate a printing process for the layer according to all of the material-filled areas contained in the layer.

The printout printing process determining module 72 is configured to layer the entire printout according to a predefined printout layer thickness; determine a layer of various repeating units through which the layer of the printout passes, and map, according to the printing process of the layer of various repeating units through which the layer of the printout passes, to obtain a printing process of the layer of the printout.

In an optional embodiment, for each layer in a single repeating unit, searching, with the repeating unit printing process determining module 71, for a material-filled area in the layer comprises: for each layer in a single repeating unit, searching for a closed solid area in the layer, and determining each closed solid area as a material-filled area.

In an optional embodiment, mapping, with the printout printing process determining module 72, according to the printing process of the layer of various repeating units through which the layer of the printout passes, to obtain a printing process of the layer of the printout comprises: for the printing process of the layer of various repeating units through which the layer of the printout passes, converting position information of various material-filled areas in each printing process from the coordinate system of the repeating unit to the coordinate system of the printout, and then adding the printing process subjected to the coordinate conversion to the printing process of the layer of the printout.

In an optional embodiment, acquiring, with the repeating unit printing process determining module 71, the structure and size of a single repeating unit in the structure of a printout in additive manufacturing comprises: according to the shape and size of the printout and a predefined arrangement of the repeating units inside the printout, designing the structure and size of a single repeating unit by using a computer-aided design tool; or, acquiring the structure and size of a single repeating unit in the structure of the printout, and defining the structure and size of a single repeating unit by using implicit functions.

In an optional embodiment, the above-described device further comprises a printing module configured to execute printing tasks according to the printing processes of each layer of the printout, thereby acquiring the printout.

Fig. 8 is a structural diagram of a device 80 for formulating a printing process in additive manufacturing provided by another embodiment of the present invention, the device comprising: a memory 81 and a processor 82 capable of accessing the memory 81, the memory 81 storing an instruction that, when executed by the processor 82, causes the processor 82 to perform the steps of the method as described in steps 301-305 or steps 401-409.

An embodiment of the present invention is directly integrable into AM software and/or hardware.

The above-described embodiment is only a preferred embodiment of the present invention, rather than being intended to limit the scope of the present invention, and any modifications, equivalent substitutions, and improvements made without departing from the spirit or principle of the present invention shall fall within the scope of protection of the present invention.

## Claims

1. Method for formulating a printing process in additive manufacturing, which is **characterized by** comprising:
acquiring a structure and size of a single repeating unit in a structure of a printout in the additive manufacturing;
layering the single repeating unit according to a set layering thickness of the repeating unit;
for each layer in a single repeating unit, searching for material-filled areas in the layer, and formulating a printing process for the layer according to all of the material-filled areas contained in the layer;
layering the entire printout according to a predefined printout layer thickness;
determining a layer of various repeating units through which the layer of the printout passes, and mapping, according to the printing process of the layer of various repeating units through which the layer of the printout passes, to obtain a printing process of the layer of the printout.

2. Method according to Claim 1, **characterized in that**, for each layer in a single repeating unit, the searching for material-filled areas in the layer comprises:
for each layer in a single repeating unit, searching for closed solid areas in the layer, and determining each closed solid area as a material-filled area.

3. Method according to Claim 1, **characterized in that**, formulating a printing process for the layer according to all of the material-filled areas contained in the layer comprises:
contents of the printing process, which comprises: a laser power, scanning speed, repeating unit layer thickness, and scanning strategy, the scanning strategy comprising: a filling mode and location information of each material-filled area.

4. Method according to Claim 3, **characterized in that** the filling mode comprises: scan area features and scan vector information, wherein the scan area features include: a shape and size of a scan area, and scan vector information includes: a scan vector direction, translation size or offset direction between adjacent scan vectors.

5. Method according to Claim 1, **characterized in that**, mapping, according to the printing process of the layer of various repeating units through which the layer of the printout passes, to obtain a printing process of the layer of the printout comprises:
for the printing process of the layer of various repeating units through which the layer of the printout passes, converting position information of various material-filled areas in each printing process from a coordinate system of the repeating unit to a coordinate system of the printout, and then adding the printing process subjected to the coordinate conversion to the printing process of the layer of the printout.

6. Method according to Claim 1, **characterized in that**, acquiring the structure and size of a single repeating unit in the structure of a printout in additive manufacturing comprises:
according to the shape and size of the printout and a predefined arrangement of the repeating units inside the printout, designing a structure and size of a single repeating unit by using a computer-aided design tool; or
acquiring the structure and size of a single repeating unit in the structure of the printout and defining a structure and size of a single repeating unit by using implicit functions.

7. Method according to Claim 1, **characterized in that**, after mapping, according to the printing process of the layer of various repeating units through which the layer of the printout passes, to obtain a printing process of the layer of the printout, the method further comprises:
performing printing tasks according to the printing processes of various layers of the printout to acquire the printout.

8. Device (70) for formulating a printing process in additive manufacturing, **characterized in that** the device comprises:
a repeating unit printing process determining module (71), configured to acquire a structure and size of a single repeating unit in a structure of a printout in the additive manufacturing; layer the single repeating unit according to a set layering thickness of the repeating unit; for each layer in a single repeating unit, search for material-filled areas in the layer, and formulate a printing process for the layer according to all of the material-filled areas contained in the layer;
a printout printing process determining module (72), configured to layer the entire printout according to a predefined printout layer thickness; determine a layer of various repeating units through which the layer of the printout passes, and map, according to the printing process of the layer of various repeating units through which the layer of the printout passes, to obtain a printing process of the layer of the printout.

9. Device (70) according to Claim 8, **characterized in that**, mapping, with the printout printing process determining module (72), according to the printing process of the layer of various repeating units through which the layer of the printout passes, to obtain a printing process of the layer of the printout comprises:
for the printing process of the layer of various repeating units through which the layer of the printout passes, converting position information of various material-filled areas in each printing process from a coordinate system of a repeating unit to a coordinate system of the printout, and then adding the printing process subjected to the coordinate conversion to the printing process of the layer of the printout.

10. Device (80) for formulating a printing process in additive manufacturing, **characterized in that** the device comprises: a memory (81) and a processor (82) capable of accessing the memory (81), the memory (81) storing an instruction that, when executed by the processor (82), causes the processor (82) to perform the steps of the method according to any one of Claims 1 to 7.
